# EUROPÄISCHE PATENTSCHRIFT

(11) **EP 1 953 189 B1**
(45) Veröffentlichungstag und Bekanntmachung des Hinweises auf die Patenterteilung: **12.10.2011**
(21) Anmeldenummer: 07122983.5
(22) Anmeldetag: 12.12.2007
(51) Int. Cl.: C08K 11/00, C08L 21/00

(54) **Füllstoff für Elastomere**
Filler for elastomers
Agent de remplissage pour élastomères

(30) Priorität: 03.02.2007 DE 102007005453
(43) Veröffentlichungstag der Anmeldung: 06.08.2008
(73) Patentinhaber: Continental Reifen Deutschland GmbH, 30165 Hannover (DE)
(72) Erfinder: Fey, Thomas, Dr., 34454 Bad Arolsen (DE); Schulze, Herbert, Dr., 21335 Lüneburg (DE); Herzog, Katharina, Dr., 31177 Harsum (DE); Recker, Carla, Dr., 30167, Hannover (DE); Weiland, Uta, 30167, Hannover (DE)
(74) Vertreter: Finger, Karsten

(56) Entgegenhaltungen:
- US-B1- 6 479 558
- DATABASE WPI Week 200442 Derwent Publications Ltd., London, GB; AN 2004-444394 XP002473330 -& JP 2004 147580 A (ASAHI KASEI KK) 27. Mai 2004 (2004-05-27)

## Beschreibung

Die Erfindung betrifft einen Füllstoff für Elastomere, der insbesondere für Kautschukvulkanisate, die in der Reifenindustrie verwendet werden, geeignet ist. Die Erfindung betrifft außerdem ein Verfahren zur Herstellung eines erfindungsgemäßen Füllstoffs, eine den Füllstoff enthaltende Kautschukmischung und ein daraus hergestelltes Vulkanisationsprodukt, insbesondere einen Fahrzeugreifen.

Füllstoffe werden in Kautschukmischungen genutzt, um einerseits das Endprodukt zu verbilligen und andererseits die physikalisch-mechanischen Kautschukeigenschaften gezielt zu beeinflussen. In der Kautschukindustrie unterscheidet man die Füllstoffe nach der Ausgeprägtheit ihrer Wirkung, also ihrer Aktivität. Die Aktivität eines Füllstoffes ist abhängig von der Teilchengröße der Füllstoffpartikel, deren spezifischer Oberfläche, der geometrischen Gestalt der Partikel und der chemischen Zusammensetzung. So bezeichnet man Füllstoffe als aktiv, bei denen ein Eigenschaftsoptimum in Abhängigkeit ihrer Konzentration verzeichnet wird, so dass die betreffende Kautschukeigenschaft "aktiv" beeinflusst wird, so genannte verstärkende Füllstoffe. Zu diesen Füllstoffen werden z. B. Russ oder Silika gezählt. Im Gegensatz zu den verstärkenden Füllstoffen ist bei den inaktiven, also den nur über den Volumenanteil verstärkenden Füllstoffen eine fast durchweg stetige Veränderung des Eigenschaftsbildes mit dem Grad der Füllung zu beobachten. Als inaktiver Füllstoff wird in Kautschukmischungen z. B. Kreide verwendet.

Die Verstärkungswirkung beruht im Wesentlichen auf physikalischen und/oder chemischen Wechselwirkungen an der Grenzfläche zwischen Füllstoff und Kautschukmatrix. Deshalb spielen insbesondere die Oberflächeneigenschaften der Füllstoffe eine wesentliche Rolle. Viele bekannte Füllstoffe können an der Oberfläche modifiziert werden, um eine gute Anbindung an die Kautschukmatrix herzustellen und damit die Eigenschaften des Vulkanisates positiv zu beeinflussen.

Ausgehend von diesem Stand der Technik liegt der Erfindung die Aufgabe zugrunde, einen weiteren Füllstoff für Elastomere, insbesondere zur Verwendung in gummielastischen Produkten, bereitzustellen.

Diese Aufgabe wird durch einen Füllstoff gelöst, der effektive Mikroorganismen aufweist. Weiterbildungen und vorteilhafte Ausgestaltungen der Erfindung ergeben sich aus den Unteransprüchen.

Bei den so genannten effektiven Mikroorganismen handelt es sich um dem Fachmann bekannte Zusammensetzungen, die von dem japanischen Professor Dr. Teruo Higa entwickelt worden sind. Derartige Zusammensetzungen enthalten etwa 80 verschiedene Kleinstlebewesen, die in ihrer Wirkung so aufeinander abgestimmt sind, dass sie ein ausgeglichenes Milieu schaffen. Es handelt sich dabei um Fotosynthesebakterien, Aktinomyzeten, Milchsäurebakterien, Hefen und Pilzarten.

Es hat sich nun herausgestellt, dass sich derartige effektive Mikroorganismen, wenn sie Teil eines Füllstoffs für Elastomere sind, dazu eignen, in Kautschukmischungen oder in aus Kautschukmischungen hergestellten Kautschukvulkanisationsprodukten Emissionen flüchtiger organischer Verbindungen, so genannter VOCs, zu verringern oder zu vermeiden. Darüber hinaus eignet sich ein derartiger Füllstoff auch, den Alterungsprozess der Kautschukmischungen oder der aus den Kautschukmischungen hergestellten Kautschukvulkanisationsprodukte sowie der gegebenenfalls darin enthaltenen Festigkeitsträgern zu verlangsamen. Schließlich hat sich herausgestellt, dass sich mit einem derartigen Füllstoff die Oxidationsbeständigkeit der gegebenenfalls in einem Kautschukvulkanisationsprodukt enthaltenen oxidationsanfälligen Festigkeitsträger erhöhen lässt. Bei diesen oxidationsanfälligen Festigkeitsträgern handelt es sich bevorzugt um Stahlcorde. Erfindungsgemäß kann bei solchen Festigkeitsträgern auf einen Korrosionsschutz verzichtet werden, so dass diese vorteilhaft in anderer Weise an die Elastomermatrix anbinden.

Die Erhöhung der Oxidationsbeständigkeit und die Verlangsamung des Alterungsprozesses waren bisher nur durch Zugabe von Ozonschutzwachsen und verfärbenden Alterungsschutzmitteln möglich, die sich allerdings nachteilig auf andere gewünschte Eigenschaften der Elastomere auswirkten. Durch die Verwendung eines Füllstoffes mit effektiven Mikroorganismen kann die Zugabe derartiger Additive verringert bis ganz eingestellt werden. Effektive Mikroorganismen besitzen nämlich die Fähigkeit zur Antioxidation, d.h. sie können nicht nur Oxidation verhindern, sondern auch bereits erfolgte Oxidationen rückgängig machen. Negative Auswirkungen der effektiven Mikroorganismen auf die Eigenschaften des Elastomers konnten nicht festgestellt werden. Insbesondere ist durch den Verzicht bzw. die Verringerung des Zusatzes von Alterungsschutzmitteln die Herstellung farbiger und heller Elastomere möglich. Der Zusatz des oder der erfindungsgemäßen Füllstoffe erfolgt in an sich bekannter Weise in dem Fachmann bekannten Mengen.

Die vorgenannten Erkenntnisse nutzend, betrifft die Erfindung entsprechend auch die Verwendung effektiver Mikroorganismen als Additiv in Kautschukmischungen oder in den daraus hergestellten Kautschukvulkanisationsprodukten zur Verringerung oder Vermeidung von Emissionen flüchtiger organischer Verbindungen, insbesondere solcher Emissionen aus kieselsäurehaltigen Kautschukmischungen, zur Verlangsamung des Alterungsprozesses der Kautschukmischungen oder der aus den Kautschukmischungen hergestellten Kautschukvulkanisationsprodukte sowie der darin gegebenenfalls enthaltenen Festigkeitsträger und/oder zur Erhöhung der Oxidationsbeständigkeit der gegebenenfalls in einem Kautschukvulkanisationsprodukt enthaltenen oxidationsanfälligen Festigkeitsträger.

Wenn Silika als Verstärkungsfüllmittel verwendet wird, so wird dessen Verstärkungseffekt für die Elastomere üblicherweise mit Hilfe eines oder mehrerer Kopplungsmittel erhöht. Emissionen flüchtiger organischer Verbindungen entstehen, wenn ein solches Kopplungsmittel zusammen mit dem Silika verwendet wird.

Derartige Kopplungsmittel sind insbesondere silanbasierte Verbindungen, die einen Anteil (einen silanbasierten Anteil, wie beispielsweise einen Alkoxysilananteil) aufweisen, der mit Hydroxylgruppen (beispielsweise Silanolgruppen) an der Oberfläche des Silikas reagiert, und einen anderen Anteil (beispielsweise eine Polysulfidbrücke) aufweisen, der mit einem konjugierten dienbasierten Elastomer eine Wechselwirkung eingeht.

Beispielsweise werden bis(3-Triethoxysilylpropyl)polysulfide mit einem Durchschnitt von 2 bis 4 verbindenden Schwefelatomen in ihrer Polysulfidbrücke oft als Kopplungsmittel verwendet, um die Kopplung der Silikas, wie etwa Aggregate ausgefällten Silikas, an verschiedene konjugierte dienbasierte Elastomere zu erhöhen. Die Verwendung solcher Koppelungsmittel ist dem Fachmann auf diesem Gebiet der Technik geläufig.

Die Verwendung silanhaltiger Kopplungsmittel, die auf einer Reaktion zwischen den Silan- und Hydroxylgruppen (beispielsweise Silanolgruppen) an der Oberfläche eines Silikas beruhen, setzt jedoch typischerweise ein Alkohol als Nebenprodukt solcher Reaktion frei. Beispielsweise setzt eine Reaktion eines bis(3-Triethoxysilylpropyl)polysulfid-Kopplungsmittels mit Silanolgruppen an der Oberfläche von Silika Ethanol als Nebenprodukt frei.

Es ist erwünscht, eine solche durch eine In-Situ-Reaktion genannter Reaktanten erzeugte Alkoholentwicklung während des Mischens einer Kautschukzusammensetzung zu verringern bzw. zu vermeiden.

Durch die Verwendung effektiver Mikroorganismen, insbesondere als Teil bekannter Füllstoffe, wird auf einfache Weise eine Verringerung der flüchtigen organischen Verbindungen erreicht. Die Verwendung kostenintensiver spezieller Silane und vorbehandelter Kieselsäuren, so genannter Pretreated Silicas, die nach dem Stand der Technik die Alkoholbildung gering halten sollen, ist erfindungsgemäß nicht mehr erforderlich. Dadurch ist die Auswahl der Silane nicht mehr beschränkt. Es können vorteilhaft Elastomere mit bisher unbekannten Eigenschaften hergestellt werden.

Bei dem erfindungsgemäßen Füllstoff handelt es sich vorzugsweise um einen Füllstoff, dessen Verwendung an sich bereits für Elastomere bekannt ist, der jedoch erfindungsgemäß die effektiven Mirkoorganismen aufweist, die vorzugsweise auf der Oberfläche des Füllstoffes angeordnet sind. Der an sich bekannte Füllstoff bildet hierbei dann quasi das Trägermaterial für die effektiven Mikroorganismen, wobei die Gesamtheit einen neuen Füllstoff darstellt.

Eine Weiterbildung der Erfindung sieht vor, dass der Füllstoff so genannte EM-Keramik in Pulverform ist. EM steht hierbei für effektive Mikroorganismen.

EM-Keramik basiert auf Ton, der üblicherweise nach mehrmonatiger Fermentation mit effektiven Mikroorganismen unter anaeroben Bedingungen bei hohen Temperaturen gebrannt wird. Hierbei werden die effektiven Mikroorganismen quasi in die Keramik eingesintert. Da diese effektiven Mikroorganismen die beim Sinterprozess auftretenden hohen Temperaturen überleben, hat sich herausgestellt, dass pulverisierte EM-Keramik ein besonders effektives Füllmittel für Elastomere zum Erreichen der genannten Wirkungen ist.

Weiterhin ist vorgesehen, dass der Füllstoff Silika ist. Dadurch wird erreicht, dass sich die effektiven Mikroorganismen schon dort befinden, wo die Emissionen flüchtiger organischer Verbindungen in erster Linie entstehen.

Bei dem Silika handelt es sich um synthetisches amorphes Silika, ausgewählt aus Aggregaten ausgefällten Silikas, die ausgefällte Aluminosilikate als co-ausgefälltes Silika und Aluminium einschließen, und/oder aus verdampftem, pyrogen geformtem Silika.

Ausgefälltes Silika ist dem Fachmann bekannt. Beispielsweise kann solches ausgefälltes Silika durch kontrollierten Zusatz einer Säure, wie beispielsweise Salzsäure oder Schwefelsäure, zu einer Basislösung, z.B. Natriumhydroxid, eines Silikats, beispielsweise Natriumsilikat, üblicherweise in Gegenwart eines Elektrolyten, beispielsweise Natriumsulfat, ausgefällt werden. In erster Linie bilden sich während eines solchen Prozesses typischerweise kolloidale Silikapartikel, die rasch zusammenwachsen, um Aggregate solcher Primärpartikel zu bilden und die dann durch Filtern, Waschen des Filterkuchens mit Wasser oder einer wässrigen Lösung und Trocknen des rückgewonnenen ausgefällten Silikas als Ausfällungen rückgewonnen werden. Solche Herstellungsverfahren für ausgefälltes Silika und Variationen davon sind dem Fachmann auf diesem Gebiet der Technik bekannt.

Die Erfindung betrifft auch ein Verfahren zur Herstellung des vorgenannten Füllstoffs, bei dem Silika in bekannter Weise aus einer Lösung ausgefällt wird, wobei dieser Lösung zuvor effektive Mikroorganismen zugesetzt werden. Auf diese Weise ist es besonders einfach das erfindungsgemäße Füllmittel herzustellen. Das Silika wird hierbei beim Fällungsprozess mit den effektiven Mikroorganismen dotiert.

Die Erfindung umfasst auch eine Kautschukmischung, die den erfindungsgemäßen und vorstehend in seinen verschiedenen möglichen Ausführungsformen beschriebenen Füllstoff alleine oder in Mischungen mit anderen Füllstoffen enthält.

Den Kautschukmischungen können weitere Kautschukhilfsmittel zugesetzt sein, die dem Fachmann bekannt sind. Zu derartigen Kautschukhilfsmitteln zählen u. a. Vernetzer, Reaktionsbeschleuniger, Alterungsschutzmittel, Wärmestabilisatoren, Licht- und UV-Schutzmittel, Ozonschutzmittel, Verarbeitungshilfsmittel, Weichmacher, Treibmittel, Farbstoffe, Streckmittel usw. Derartige Zusätze und Hilfsmittel sind beispielsweise aus: J. Schnetger, Lexikon der Kautschuktechnik, 2. Auflage, Hüthig Buch Verlag, Heidelberg, 1991, u. a. S. 42-48 bekannt.

Die Vulkanisation der Kautschukmischungen mit erfindungsgemäßem Füllstoff wird entsprechend der üblichen, im Stand der Technik allgemein bekannten Vorschriften, häufig in Anwesenheit von Schwefel oder Schwefelspendern durchgeführt.

Die zugehörigen Vulkanisate sind für die Herstellung technischer Gummiprodukte, insbesondere für Fahrzeugreifen sowie speziell die Laufstreifen von Fahrzeugluftreifen geeignet. Die Erfindung umfasst daher ebenso ein Kautschukvulkanisationsprodukt, insbesondere in Form eines technischen Gummiprodukts oder eines Fahrzeugreifens, das wenigstens in Teilen mit einer Kautschukmischung, die den erfindungsgemäßen Füllstoff enthält, hergestellt wurde.

Diese Kautschukvulkanisationsprodukte, beispielsweise Fahrzeugreifen, zeichnen sich durch ein verbessertes Alterungsverhalten und eine sehr gute Oxidationsbeständigkeit aus.

Es werden zudem aufgrund verringerter bis vermiedener Emission flüchtiger organischer Verbindungen neuartige Kautschukvulkanisationsprodukte erhalten.

Entsprechend betrifft die Erfindung auch die Verwendung von effektiven Mikroorganismen als Additiv in Kautschukmischungen oder daraus hergestellter Kautschukvulkanisationsprodukten zur Verringerung oder Vermeidung von Emissionen flüchtiger organischer Verbindungen, insbesondere solche aus kieselsäurehaltigen Mischungen.

Weiterhin betrifft die Erfindung die Verwendung von effektiven Mikroorganismen als Additiv in Kautschukmischungen oder daraus hergestellter Kautschukvulkanisationsprodukten zur Verlangsamung des Alterungsverhaltens der Kautschukmischungen oder daraus hergestellter Kautschukvulkanisationsprodukte, und schließlich betrifft die Erfindung die Verwendung von effektiven Mikroorganismen als Additiv in Kautschukmischungen oder daraus hergestellter Kautschukvulkanisationsprodukten zur Verlangsamung des Alterungsverhaltens darin enthaltener Festigkeitsträger und/oder zur Erhöhung der Oxidationsbeständigkeit gegebenenfalls im Kautschukvulkanisationsprodukt enthaltener Festigkeitsträger.

## Patentansprüche

1. Füllstoff für Elastomere, insbesondere zur Verwendung in gummielastischen Produkten, **dadurch gekennzeichnet, dass** der Füllstoff eine Effektive-Mikroorganismen-Keramik (EM-Keramik) in Pulverform oder mit effektiven Mikroorganismen dotierte Silka ist.

2. Verfahren zur Herstellung eines Füllstoffs nach Anspruch 1, bei dem Silika aus in an sich bekannter Weise aus einer Lösung ausgefällt wird, der jedoch zuvor effektive Mikroorganismen zugesetzt werden.

3. Kautschukmischung, insbesondere für die Herstellung eines Teils eines Fahrzeugreifens, enthaltend einen Füllstoff nach Anspruch 1 oder 2.

4. Kautschukvulkanisationsprodukt, insbesondere Fahneugreifen, wenigstens in Teilen hergestellt mit einer Kautschukmischung nach Anspruch 1.

5. Verwendung von EM-Keramik in Pulverform oder mit effektiven Mikroorganismen dotierte Silka als Additiv in Kautschukmischungen oder daraus hergestellter Kautschukvulkanisationsprodukten zur Verringerung oder Vermeidung von Emissionen flüchtiger organischer Verbindungen, insbesondere solche aus kieselsäurehaltigen Mischungen.

6. Verwendung von EM-Keramik in Pulverform oder mit effektiven Mikroorganismen dotierte Silka als Additiv in Kautschukmischungen oder daraus hergestellter Kautschukvulkanisationsprodukten zur Verlangsamung des Alterungsverhaltens der Kautschukmischungen oder daraus hergestellter Kautschukvulkanisationsprodukte.

7. Verwendung von EM-Keramik in Pulverform oder mit effektiven Mikroorganismen dotierte Silka als Additiv in Kautschukmischungen oder daraus hergestellter Kautschukvulkanimlonsprodukten zur Verlangsamung des Alterungsverhaltens darin enthaltener Festigkeitsträger und/oder zur Erhöhung der Oxidationsbeständigkeit gegebenenfalls im Kautschukvulkanisationsprodukt enthaltener Festigkeitsträgor.

## Claims

1. Filler for elastomers, in particular for use in rubber-derived elastic products, **characterized in that** the filler is an effective-microorganisms ceramic (EM ceramic) in powder form or is silica doped with effective microorganisms.

2. Process for producing a filler according to Claim 1, in which silica is precipitated in a manner known per se from a solution, but effective microorganisms have been added beforehand to the solution.

3. Rubber mixture, in particular for producing a part of a tyre, comprising a filler according to Claim 1 or 2.

4. Rubber vulcanization product, in particular tyre, at least parts of which have been produced with a rubber mixture according to Claim 1.

5. Use of EM ceramic in powder form or silica doped with effective microorganisms as additive in rubber mixtures or in rubber vulcanization products produced therefrom, to reduce or eliminate emission of volatile organic compounds, in particular those from silica-containing mixtures.

6. Use of EM ceramic in powder form or silica doped with effective microorganisms as additive in rubber mixtures or in rubber-vulcanization products produced therefrom for retarding the ageing of the rubber mixtures or of rubber vulcanization products produced therefrom.

7. Use of EM ceramic in powder form or silica doped with effective microorganisms as additive in rubber mixtures or in rubber-vulcanization products produced therefrom for retarding the ageing of reinforcing agents present therein and/or for increasing the oxidation resistance of reinforcing agents which may be present in the rubber vulcanization product.

## Revendications

1. Charge pour élastomères, notamment pour une utilisation dans des produits élastiques de caoutchouc, **caractérisée en ce que** la charge est une céramique à microorganismes efficaces (céramique EM) sous la forme de poudre ou une silice dopée avec des microorganismes efficaces.

2. Procédé de fabrication d'une charge selon la revendication 1, dans lequel de la silice est précipitée d'une manière connue à partir d'une solution, à laquelle des microorganismes efficaces sont toutefois ajoutés auparavant.

3. Mélange de caoutchouc, notamment pour la fabrication d'une partie d'un pneu automobile, contenant une charge selon la revendication 1 ou 2.

4. Produit de vulcanisation de caoutchouc, notamment pneu automobile, fabriqué en moins en partie avec un mélange de caoutchouc selon la revendication 1.

5. Utilisation d'une céramique EM sous la forme de poudre ou d'une silice dopée avec des microorganismes efficaces en tant qu'additif dans des mélanges de caoutchouc ou des produits de vulcanisation de caoutchouc fabriqués à partir de ceux-ci pour réduire ou éviter les émissions de composés organiques volatils, notamment ceux à base de mélanges contenant de la silice.

6. Utilisation d'une céramique EM sous la forme de poudre ou d'une silice dopée avec des microorganismes efficaces en tant qu'additif dans des mélanges de caoutchouc ou des produits de vulcanisation de caoutchouc fabriqués à partir de ceux-ci pour ralentir le comportement de vieillissement des mélanges de caoutchouc ou des produits de vulcanisation de caoutchouc fabriqués à partir de ceux-ci.

7. Utilisation d'une céramique EM sous la forme de poudre ou d'une silice dopée avec des microorganismes efficaces en tant qu'additif dans des mélanges de caoutchouc ou des produits de vulcanisation de caoutchouc fabriqués à partir de ceux-ci pour ralentir le comportement de vieillissement de matériaux renforçants contenus dans ceux-ci et/ou pour augmenter la résistance à l'oxydation de matériaux renforçants éventuellement contenus dans le produit de vulcanisation de caoutchouc.
